# FASCICULE DE BREVET EUROPEEN

(11) **EP 1 120 303 B1**
(45) Date de publication et mention de la délivrance du brevet: **05.09.2007**
(21) Numéro de dépôt: 01420015.8
(22) Date de dépôt: 23.01.2001
(51) Int. Cl.: B60J 5/10

(54) **Ouvrant de véhicule automobile en matériau plastique et véhicule automobile équipé d'un tel ouvrant**
Kraftfahrzeugsflügel aus Kunststoff und Fahrzeug mit solchem Flügel
Plastic motor vehicle door and vehicle with such a door

(30) Priorité: 26.01.2000 FR 0001005
(43) Date de publication de la demande: 01.08.2001
(73) Titulaire: Inoplast, 07340 Saint Desirat (FR)
(72) Inventeur: Martin, Laurent, 07340 Peaugres (FR)
(74) Mandataire: Remy, Vincent Noel Paul

(56) Documents cités:
- EP-A- 0 111 457
- EP-A- 0 340 180
- WO-A-99/12758
- DE-A- 3 835 163
- GB-A- 2 078 628
- US-A- 4 822 098
- US-A- 5 449 213

## Description

L'invention a trait à un ouvrant de véhicule automobile et à un véhicule automobile équipé d'un tel ouvrant.

Un ouvrant de véhicule automobile est une partie de la carrosserie mobile entre une position dans laquelle elle permet l'accès à l'intérieur de ce véhicule et une position dans laquelle elle interdit cet accès. En pratique, un ouvrant de véhicule automobile peut être une porte, un hayon arrière, un capot ou un coffre.

Il est connu de réaliser des ouvrants de véhicule automobile en tôle. Il est également connu de réaliser des ouvrants en matériau plastique, en particulier pour les véhicules produits en série spéciale ou limitée. Cependant, pour les véhicules produits en grande série, le prix de revient d'un ouvrant réalisé en matériau plastique est, le plus souvent, sensiblement supérieur à celui d'une pièce équivalente réalisée en tôle, de sorte que la tôle est souvent préférée.

Or, un ouvrant en tôle est généralement plus lourd qu'un ouvrant en matière plastique. De plus, certaines géométries sont plus faciles à obtenir avec un matériau plastique qu'avec un ensemble d'éléments en tôle emboutie. Enfin, les propriétés d'absorption des chocs des matériaux plastiques sont supérieures à celles de la tôle. Pour toutes les raisons qui précèdent, il est souhaitable de pouvoir réaliser des ouvrants de véhicule automobile en matière plastique dont le prix de revient est sensiblement équivalent ou inférieur à celui d'un ouvrant réalisé en tôle, y compris pour des fabrications en grande série.

Par le document WO-A-99/12758, on connaît un ouvrant de véhicule automobile formé d'une armature en matière plastique et de panneaux de finition pouvant être peints aux couleurs de la carrosserie. L'utilisation d'une armature et de panneaux rapportés permet d'obtenir une grande qualité des surfaces peintes aux couleurs de la carrosserie et une stabilité mécanique satifaisante. Cependant, un tel ouvrant demeure, dans certaines configurations au moins, relativement onéreux, notamment en comparaison aux ouvrants en tôle.

Par ailleurs, US-A-4,822,098 divulgue un hayon arrière de véhicule automobile formé de deux coques en matériau thermoplastique assemblées par un revêtement adhésif. Il est en outre prévu une plaque de carton sur la face interne du hayon afin de servir de cache. Cette structure multi-couches est plus'onéreuse qu'une structure en tôle pour un hayon de taille équivalente.

C'est à ces inconvénients qu'entend plus particulièrement remédier l'invention en proposant un ouvrant de véhicule automobile pouvant être produit avec un coût unitaire particulièrement attractif, alors que ses propriétés mécaniques et esthétiques sont conformes aux règles de l'art dans le domaine de l'industrie automobile. Un ouvrant répondant en partie à ce problème est connu de EP-A-111457 étant le document le plus proche.

Dans cet esprit, l'invention concerne un ouvrant de véhicule automobile comprenant une armature en matériau plastique articulée sur la caisse du véhicule et constituant une pièce de carrosserie pour cet ouvrant, caractérisée en ce cette armature formant une piste globalement continue apte en venir en appui étanche contre un joint porté par la caisse précitée, caractérisé en ce que l'armature forme un panneau inférieur définissant une chambre dont l'ouverture est tournée vers la caisse, cette chambre étant bordée par un canal situé en partie inférieure de l'ouvrant et dont la concavité est tournée vers l'extérieur de l'ouvrant.

Le fait que la chambre formée par le panneau inférieur est ouverte vers l'intérieur de l'ouvrant permet que la surface extérieure de ce panneau constitue un élément de carrosserie conforme aux règles de l'art sans nécessité d'ajout d'un panneau de finition.

L'ouvrant de l'invention tire partie du fait que la pièce de carrosserie qui correspond à un panneau de finition des ouvrants connus, constitue également l'armature de cet ouvrant, cet ouvrant pouvant être qualifié de "mono-peau" car il ne comprend pas de partie dans laquelle un habillage ou un panneau de finition double une partie de structure. Il en résulte donc un gain de temps de fabrication et un gain de matière importants. En outre, l'armature formant la pièce de carrosserie permet d'isoler l'intérieur de l'habitacle du véhicule par rapport à l'extérieur grâce à un appui étanche de la piste qu'elle forme sur un joint de la caisse. Grâce à la géométrie particulière adoptée pour cette pièce de carrosserie, celle-ci suit la géométrie de la caisse au niveau du joint, ce qui permet un appui étanche contre ce joint, sans que l'aspect extérieur de l'ouvrant n'en soit altéré, de sorte que celui-ci peut également remplir la fonction esthétique d'un élément de carrosserie. En d'aures termes, l'armature est visible de l'extérieur du véhicule puisqu'elle constitue une pièce de carrosserie du véhicule, alors qu'elle présente, sur un côté tourné vers l'intérieur de l'habitacle, la forme de la piste d'appui contre le joint de la caisse. L'armature est donc utilisée comme pièce de carrosserie vers l'extérieur et comme piste d'appui vers l'intérieur.

Selon des aspects avantageux mais non obligatoires de l'invention, l'ouvrant incorpore une ou plusieurs des caractéristiques suivantes :
- L'armature forme, au niveau de la zone d'articulation sur la caisse, un bandeau définissant une chambre dont l'ouverture est tournée vers la caisse, des nervures de rigidification étant prévues dans cette chambre. Dans cette chambre peuvent être prévus des bossages équipés d'inserts de réception de vis de fixation de cahrnières qui servent à l'articulation de l'ouvrant sur la caisse. Le bandeau, parfois dénommé "casquette", peut être revêtu d'une peinture ton caisse, d'une peinture grainée de couleur foncée ou d'un revêtement par apprêt bouche-pores après ponçage permettant de masquer les défauts de surface. Ce bandeau forme avantageusement un logement de réception d'un organe de signalisation et des moyens d'immobilisation de cet organe dans ce volume sont aptes à être activés par l'intérieur, c'est-à-dire dans la chambre précitée. On peut prévoir que le bandeau est bordé par une gorge dont la concavité est orientée vers l'extérieur de l'ouvrant, la surface interne de la pièce de carrosserie formant, au niveau de cette gorge, une section de la piste précitée d'appui contre le joint.
- L'armature forme deux montants creux définissant chacun une chambre dont l'ouverture est tournée vers l'extérieur de l'ouvrant, chaque chambre étant garnie de rainures de rigidification alors que la surface interne de la pièce de carrosserie forme, au niveau de ces montants, des sections de la piste précitée d'appui étanche contre le joint. Ces montants assurent la liaison entre le bandeau supérieur et un panneau inférieur et sont prévus pour être recouverts par une vitre ou équivalent.
Avantageusement, au moins un bord de la chambre précitée comprend une première partie s'étendant, à partir du panneau inférieur, en direction de la caisse et une seconde partie s'étendant, à partir de la première partie, en direction d'une zone médiane de la chambre, une section de la piste étant formée par la seconde partie précitée. Cette géométrie du bord de la chambre permet de dissocier la forme extérieure de la pièce de carrosserie de la géométrie exacte du joint d'étanchéité porté par la caisse, le bord en deux parties permettant de créer la piste d'appui sur le joint, à distance de la partie visible de la pièce de carrosserie. On peut prévoir qu'un bandeau d'obturation du canal est fixé sur le panneau et/ou que le canal forme une zone de montage d'une partie d'une serrure de verrouillage de l'ouvrant en position fermée sur la caisse.

L'invention concerne également un véhicule automobile équipé d'un ouvrant tel que précédemment décrit. Un tel véhicule est d'un prix de revient inférieur à ceux de l'art antérieur qui sont équipés d'ouvrants en matériau composite.

L'invention sera mieux comprise et d'autres avantages de celle-ci appraîtront plus clairement à la lumière de la description qui va suivre d'un mode de réalisation d'un ouvrant de véhicule automobile conforme à son principe, donnée uniquement à titre d'exemple et faite en référence aux dessins annexés dans lesquels :
- la figure 1 est une vue en perspective éclatée par l'extérieur d'un hayon de véhicule automobile conforme à l'invention ;
- la figure 2 est une vue en perspective par l'intérieur du hayon de la figure 1 ;
- la figure 3 est une coupe longitudinale médiane du hayon des figures 1 et 2 selon la ligne III-III à la figure 2, avec interruption au niveau de la vitre ;
- la figure 4 est une coupe selon la ligne IV-IV à la figure 2 ;
- la figure 5 est une coupe selon la ligne V-V à la figure 2 et
- la figure 6 est une section selon la ligne VI-VI à la figure 2.

L'ouvrant représenté sur les figures est un hayon arrière 1 destiné à être articulé sur la caisse 2 d'un véhicule automobile de tout type, à usage personnel, professionnel ou militaire. La caisse 2 est représentée en traits mixtes et le bord 3 de l'ouverture destinée à être obturée par le hayon 1 est équipé d'un joint 4 prévu pour être comprimé entre le hayon 1 et le bord 3.

Conformément à l'invention, le hayon 1 est formé essentiellement d'une pièce de carrosserie 10 en matériau plastique qui constitue également une armature pour l'ouvrant 1. La pièce ou armature 10 est obtenue par moulage par injection et/ou compression de matériaux plastiques thermo-durcissables chargés en fibres de renfort, telles que des fibres de verre ou équivalentes. La matrice utilisée est à base de résine polyester et comprend des additifs, tels que des charges, un agent de démoulage, des colorants, etc...

La pièce 10 comprend un bandeau supérieur 11 relié à un panneau inférieur 12 par deux montants 13 et 14. Une ouverture 15, globalement rectangulaire et définie entre les éléments 11 à 14, est prévue pour être obturée par une vitre 16.

Le bandeau 11 et et le panneau 12 ont une épaisseur e, respectivement e', comprise entre 2 et 6 mm, de préférence de l'ordre de 4 mm.

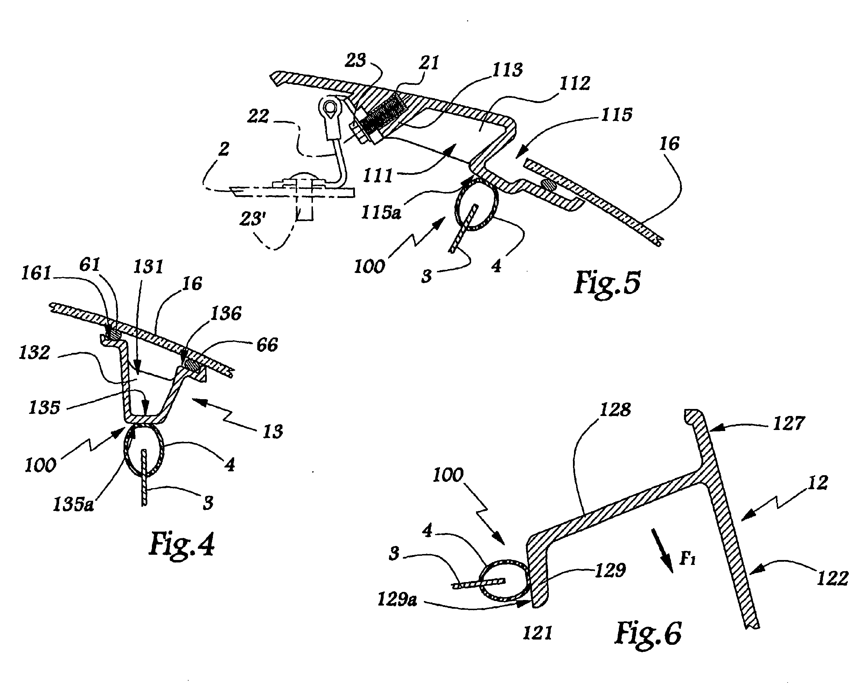

Le bandeau 11 a une concavité tournée vers la caisse 2, c'est-à-dire vers l'intérieur du véhicule. Le bandeau 11 forme une chambre 111 dans laquelle sont prévus des nervures de rigidification 112 et deux bossages 113 de réception d'inserts métalliques 21 sur lesquels peuvent être montées des charnières 22 grâce à des vis 23, les charnières 22 étant également montées sur la caisse 2 grâce à des vis ou des goujons 23' soudés sur les charnières 22, ainsi que cela ressort de la figure 5. Ainsi, la pièce 10, qui forme les éléments 11 à 14 de façon monobloc, est directement articulée sur la caisse 2 grâce aux charnières 22, les vis de fixation 23 et les bossages 113 étant accessibles par l'intérieur de la chambre 111.

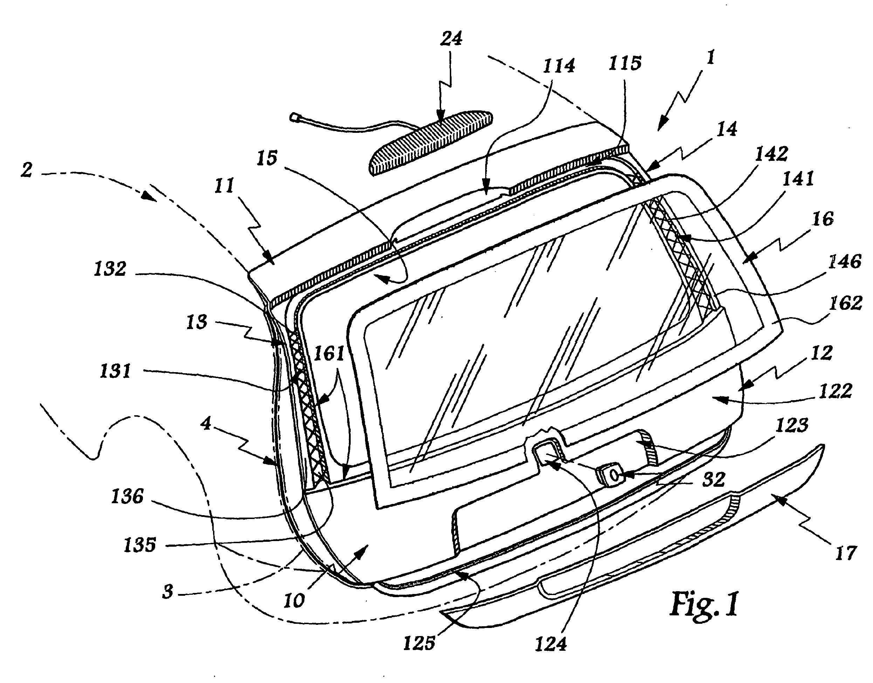

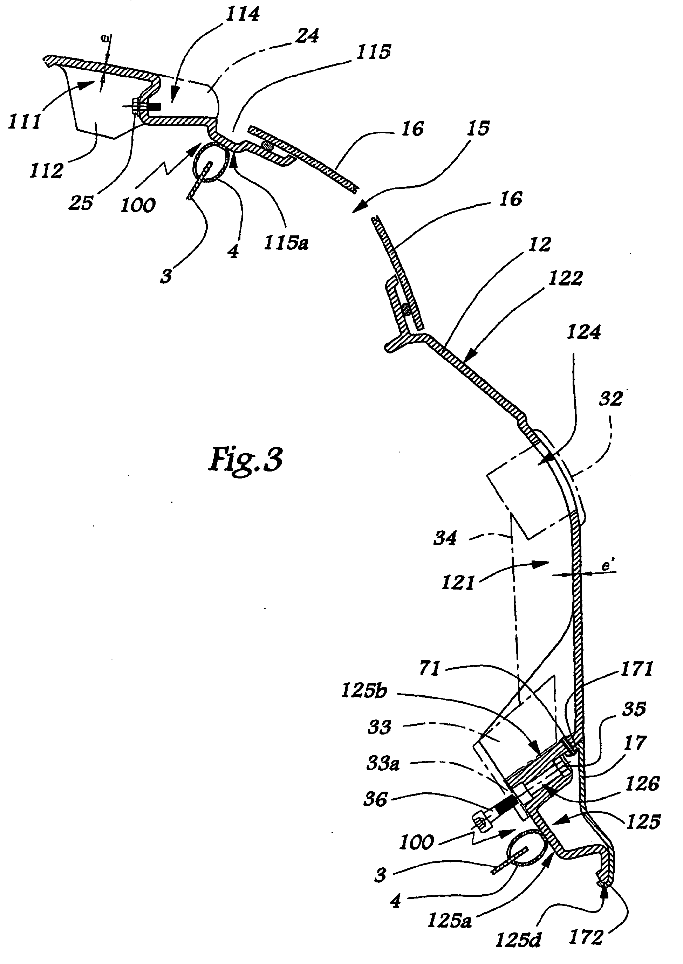

Le bandeau 11 forme également, du côté extérieur de l'ouvrant 1 visible à la figure 1, un logement 114 pour un feu stop 24 du véhicule. Le feu 24 est immobilisé dans le logement 114 grâce à des vis dont une seule apparaît à la figure 3 avec la référence 25, ces vis traversant le bandeau 11 de la chambre 111 vers le logement 114, de telle sorte qu'elles peuvent être serrées ou desserrées par l'intérieur du hayon 1 et, plus spécifiquement, par l'intérieur de la chambre 111.

Le bandeau 11 forme également une gorge 115 dont la concavité est tournée vers l'extérieur du hayon 1 et dont on note 115a la surface tournée vers l'intérieur du véhicule, c'est-à-dire la surface interne de la pièce 10 au niveau de la gorge 115. Cette surface 115a s'étend sur sensiblement toute la largeur du hayon 1 et forme une partie d'une piste 100 d'appui du hayon 1 contre le joint 4.

Le panneau 12 forme une chambre 121 dont l'ouverture est tournée vers l'intérieur de l'ouvrant 1, c'est-à-dire vers la caisse 2. La surface externe 122 du panneau 12 est prévue pour être peinte à la couleur de la caisse 2 et forme une dépression 123 de réception d'une plaque minéralogique non représentée. Un orifice 124 est prévu dans le panneau 12 pour la réception d'une partie de commande 32 d'une serrure dont la partie 33 destinée à coopérer avec la caisse 2 est logée dans la chambre 121. Une liaison cinématique 34 relie les parties de serrure 32 et 33, cette liaison pouvant être formée de bielles, d'un câble ou d'un autre moyen.

Un canal 125 est formé en partie inférieure du panneau 12, c'est-à-dire à l'opposé du panneau 11. La concavité de ce canal 125 est tournée vers l'extérieur du hayon 1 et l'on note 125a la surface intérieure de la pièce 10 au niveau du canal 125. Cette surface 125a est conformée pour venir en appui contre le joint 4 et forme la partie inférieure de la piste 100, cette partie de piste 125a étant globalement parallèle à la partie de piste 115a.

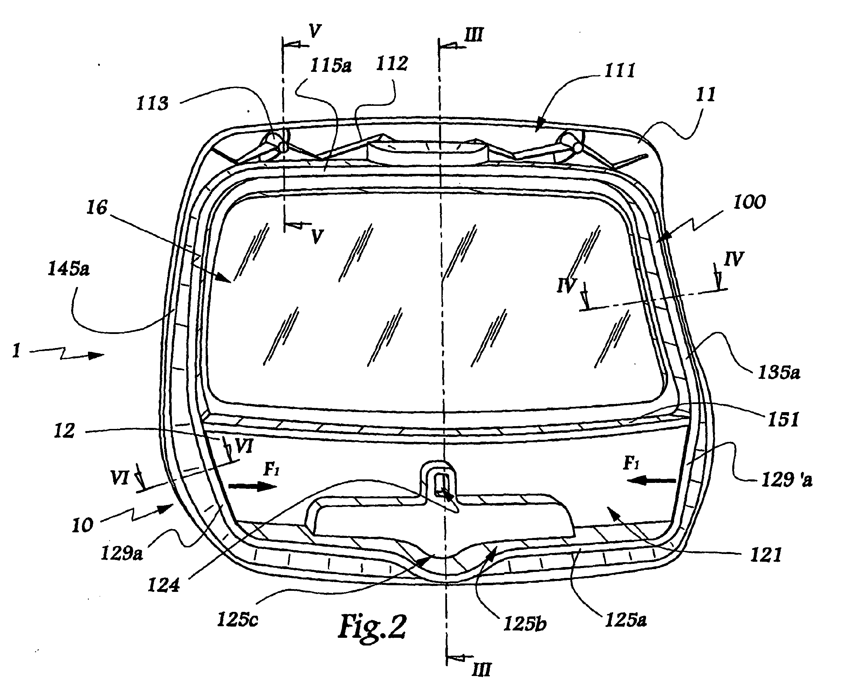

Un écrou ou un insert 35 est intégré dans l'épaisseur de la pièce 10 au voisinage du canal 125 et en regard d'un perçage 126 de réception d'une vis 36 d'immobilisation d'une patte 33a de la partie de serrure 33, une seule vis étant visible sur les figures alors que plusieurs vis peuvent être prévues. Comme il ressort plus clairement des figures 2 et 3, la cloison supérieure 125b du canal 125 forme, au niveau d'une partie médiane du hayon 1, une zone de réception 125c de la partie de serrure 33, ce qui permet une immobilisation ferme de celle-ci, notamment grâce aux vis 36.

Comme il ressort plus particulièrement de la figure 6, un bord latéral 127 du panneau 12 se prolonge en direction de la caisse 2 par une partie en saillie 128 globalement perpendiculaire à la surface externe 122 du panneau 12, la partie en saillie 128 étant pourvue, à son extrémité opposée à la surface principale du panneau 12, d'une bordure 129 dirigée vers la zone médiane du panneau 12, c'est-à-dire vers la dépression 123. La surface 129a de la bordure 129 orientée vers la caisse 2 constitue une partie de la piste 100 et est apte à venir en appui étanche contre le joint 4. La surface 129a constitue en fait une surface externe par rapport à la zone de bordure de la chambre 121.

Compte tenu de la géométrie des éléments 128 et 129, ceux-ci sont moulés au moyen de tiroirs mobiles solidaires du poinçon du moule de fabrication de la pièce 10, ces tiroirs se déplaçant lors de l'ouverture du moule selon une direction parallèle à la surface 122 et orientée vers une partie médiane de la pièce 10, comme représenté par la flèche F₁. En pratique, il est prévu un tiroir par côté de la pièce 10. Ce mode de fabrication permet de réaliser la piste 100 de façon monobloc avec la pièce 10, y compris dans cette zone de la pièce où la piste 100 est éloignée de la surface externe du hayon pour tenir compte des géométries respectives du bord 3 et de la surface 122.

Les montants 13 et 14 sont creux et ont une section transversale en forme de U comme représenté à la figure 4, la concavité de chaque montant étant orientée vers l'extérieur du hayon et définissant une chambre 131 ou 141 dans laquelle sont prévues des nervures de rigidification 132 ou 142.

On note 135 le fond de la section U du montant 13 et 135a la surface du fond 135 orientée vers la caisse 2. Cette surface 135a constitue une partie de la piste 100 apte à venir en appui contre le joint 4. La surface 135a s'étend entre la surface 115a et une surface 129'a constituant une partie de la piste 100 du côté inférieur gauche du hayon, le côté gauche étant défini par rapport au sens d'avance normal du véhicule.

De la même manière, une surface 145a est formée du côté intérieur du montant 14 et constitue une partie de la piste 100 qui s'étend entre les parties 115a et 129a de cette piste.

Au vu de ce qui précède, on comprend que la piste 100 forme une surface d'appui continue contre le joint 4, en tenant compte de la géométrie du bord 3 et sans modification de l'aspect esthétique externe du hayon 1.

La vitre 16 est disposée sur l'ouverture 15 grâce un cordon de colle 61 déposé sur une première piste de collage 161 en forme d'anneau s'étendant sur les côtés des montants 13 et 14 jouxtant l'ouverture 15 en partie inférieure du bandeau 11 et en partie supérieure du panneau 12. Deux autres pistes de collage 136 et 146 sont définies sur les bords latéraux extérieurs des montants 13 et 14, le qualificatif "extérieur" signifiant que ces pistes sont formées du côté opposé des montants 13 et 14 par rapport au plan de coupe médian de la figure 3. Des cordons de colle, dont un apparaît à la figure 4 avec la référence 66, sont prévus sur les pistes 136 et 146.

Les bords latéraux 162 de la vitre 16 sont opaques ou sérigraphiés de façon à masquer les chambres 131 et 141. Les bords supérieurs et inférieurs de la vitre 16 peuvent également être opaques ou sérigraphiés.

Une nervure interne 151 est prévue en partie inférieure de l'ouverture 15 et permet de masquer la chambre 121 lorsque le hayon est rabattu en position fermée sur le joint 4. La nervure 151 participe également à la rigidité d'ensemble du hayon 1.

Un bandeau 17 est prévu en partie basse de l'ouvrant 1 pour obturer le canal 125 afin que ce canal ne modifie pas sensiblement l'esthétique du hayon 1. Le bandeau 17 est réalisé dans un matériau thermoplastique mis en oeuvre par injection. Il est fixé sur la pièce 10 par des rivets dont un seul apparaît à la figure 3 avec la référence 71, le bandeau 17 étant pourvu d'un bord rabattu 171 apte à être plaqué contre la surface interne du canal 125.

D'autres moyens de fixation mécanique, métalliques ou en matière plastique, peuvent être utilisés pour immobiliser le bandeau 17 sur la pièce 10.

La surface extérieure du bandeau 17 peut être revêtue d'une peinture à la couleur de la carrosserie ou d'un revêtement spécifique, par exemple du type grainé par action chimique dans le moule de fabrication du bandeau ou par dépôt d'une peinture auto-grainante.

Le bord inférieur 172 du bandeau 17 coiffe le bord inférieur 125d du panneau 12 au niveau du canal 125, de sorte que le matériau du bandeau 17 peut servir à protéger le bord 125d contre des chocs. Le recouvrement du bord 125d par le bord 172 améliore également l'esthétique de l'ouvrant 1.

Comme cela ressort de la figure 2, la géométrie de la surface 125a varie selon une direction transversale, c'est-à-dire perpendiculairement au plan de coupe de la figure 3, pour s'adapter à la géométrie du bord 3.

La piste 100 de l'ouvrant 1 est continue, c'est-à-dire apte à exercer un effort réparti sur le joint 4 tout autour de l'ouverture destinée à être obturée par l'ouvrant. La piste 100 peut être appuyée sur le joint 4 au niveau de la totalité du bord 3, en vue d'assurer une étanchéité extérieure totale. En pratique, la piste 100 forme une boucle fermée longeant la périphérie de la pièce 100, tout autour de l'ouverture 15.

## Revendications

1. Ouvrant de véhicule automobile comprenant une armature (10) en matériau plastique articulée sur la caisse dudit véhicule et constituant une pièce de carrosserie pour ledit ouvrant, ladite armature formant une piste (100) globalement continue apte à venir en appui étanche contre un joint (4) porté par la caisse (2) dudit véhicule, **caractérisé en ce que** ladite armature (10) forme un panneau inférieur (12) définissant une chambre (121) dont l'ouverture est tournée vers ladite caisse (2), ladite chambre étant bordée par un canal (125) situé en partie inférieure dudit ouvrant (1) et dont la concavité est tournée vers l'extérieur dudit ouvrant.

2. Ouvrant selon la revendication 1, **caractérisé en ce que** ladite armature (10) forme, au niveau d'une zone d'articulation sur ladite caisse, un bandeau (11) définissant une chambre (111) dont l'ouverture est tournée vers ladite caisse (2), des nervures de rigidification (112) étant prévues dans ladite chambre.

3. Ouvrant selon la revendication 2, **caractérisé en ce que** ladite chambre (111) contient des bossages (113) équipés d'inserts (21) de réception de vis (23) de fixation de charnières (22) d'articulation dudit ouvrant (1) sur ladite caisse (2).

4. Ouvrant selon l'une des revendications 2 ou 3, **caractérisé en ce que** ledit bandeau (11) forme un logement (114) de réception d'un organe de signalisation (124) et **en ce que** des moyens (25) d'immobilisation dudit organe dans ledit volume sont aptes à être activés dans ladite chambre (111).

5. Ouvrant selon l'une des revendications 2 à 4, **caractérisé en ce que** ledit bandeau (11) est bordé par une gorge (115) dont la concavité est orientée vers l'extérieur dudit ouvrant, la surface interne (115a) de ladite pièce de carrosserie formant, au niveau de ladite gorge, une section de ladite piste (100).

6. Ouvrant selon l'une des revendications précédentes, **caractérisé en ce que** ladite armature (10) forme deux montants creux (13, 14) définissant chacun une chambre (131, 141) dont l'ouverture est tournée vers l'extérieur dudit ouvrant (1), chaque chambre étant garnie de nervures (132, 142) de rigidification alors que la surface interne de ladite pièce de carrosserie forme, au niveau desdits montants, des sections (135a, 145a) de ladite piste (100).

7. Ouvrant selon l'une quelconque des revendications 1 à 6, **caractérisé en ce qu'**au moins un bord (127) de ladite chambre (121) comprend une première partie (128) s'étendant, à partir dudit panneau inférieur (12), en direction de ladite caisse (2) et une seconde partie (129) s'étendant, à partir de ladite première partie, en direction d'une zone médiane (123) de ladite chambre, une section (129a, 129'a) de ladite piste (100) étant formée par ladite seconde partie dudit bord.

8. Ouvrant selon l'une des revendications 1 à 7, **caractérisé en ce qu'**il comprend un bandeau (17) d'obturation dudit canal (125), ledit bandeau étant fixé sur ledit panneau (12) .

9. Ouvrant selon l'une des revendications 1 à 8, **caractérisé en ce que** ledit canal (125) forme une zone (125c) de montage d'une partie (33) d'une serrure de verrouillage dudit ouvrant (1) en position fermée sur ladite caisse (2).

10. Véhicule automobile équipé d'un ouvrant (1) selon l'une des revendications précédentes.

## Claims

1. A motor vehicle door comprising a reinforcement (10) of plastics material hinged to the body of said vehicle and constituting a bodywork part for said door, said reinforcement forming a generally continuous track (100) suitable for bearing in leaktight manner against a sealing gasket (4) carried by the body (2) of said vehicle, the door being **characterized in that** said reinforcement (10) forms a bottom panel (12) defining a chamber (121) with its open side facing towards said body (2), said chamber being bordered by a channel (125) situated in the bottom portion of said door (1) and having its concave side facing towards the outside of said door.

2. A door according to claim 1, **characterized in that** said reinforcement (10), at a hinge zone with said body, forms a strip (11) defining a chamber (111) having its open side facing towards said body (2), stiffening ribs (112) being provided in said chamber.

3. A door according to claim 2, **characterized in that** said chamber (111) contains projections (113) fitted with inserts (21) for receiving screws (23) for fastening hinges (22) of said door (1) to said body (2).

4. A door according to claim 2 or claim 3, **characterized in that** said strip (11) forms a housing (114) for receiving a signaling member (124), and **in that** means (25) for holding said member in said volume are suitable for being activated in said chamber (111).

5. A door according to any one of clams 2 to 4, **characterized in that** said strip (11) is bordered by a groove (115) having its concave side facing towards the outside of said door, the inside surface (115a) of said bodywork part forming a section of said track (100) at said groove.

6. A door according to any preceeding claim, **characterized in that** said reinforcement (10) forms two hollow uprights (13, 14) each defining a chamber (131, 141) having its open side facing towards the outside of said door (1), each chamber being provided with stiffening ribs (132, 142), while the inside surface of said bodywork part forms sections (135a, 145a) of said track (100) at said uprights.

7. A door according to any one of claims 1 to 6, **characterized in that** at least one edge (127) of said chamber (121) has a first portion (128) extending from said bottom panel (12) towards said body (2), and a second portion (129) extending from said first portion towards a middle zone (123) of said chamber, a section (129a, 129'a) of said track (100) being formed by said second portion of said edge.

8. A door according to any one of claims 1 to 7, **characterized in that** it includes a strip (17) closing said channel (125), said strip being fastened to said panel (12).

9. A door according to claim 1 or claim 8, **characterized in that** said channel (125) forms a zone (125c) for mounting a portion (33) of a lock for locking said door (1) in a closed position on said body (2).

10. A motor vehicle fitted with a door (1) according to any preceding claim.

## Patentansprüche

1. Kraftfahrzeugklappe, umfassend eine durch Gelenke verbundene Armatur (10) aus Kunststoffmaterial auf der Karosserie des Fahrzeugs, und die ein Karosserieteil für diese Klappe darstellt, wobei diese Armatur eine insgesamt fortlaufende Strecke (100) formt, die geeignet ist, gegen eine Dichtung (4), die von der Karosserie (2) getragen wird, in dichter Auflage zu kommen, **dadurch gekennzeichnet, dass** die Armatur (10) eine untere Wand (12) formt, die eine Kammer (121) definiert, deren Öffnung der Karosserie (2) zugewandt ist, wobei diese Kammer von einem Kanal (125) eingefasst ist, der im Unterteil der Klappe (1) angeordnet ist und dessen Konkavität der Außenseite der Klappe zugewandt ist.

2. Klappe nach Anspruch 1, **dadurch gekennzeichnet, dass** die Armatur (10) auf der Höhe einer Gelenkverbindungszone auf der Karosserie eine Leiste (11) formt, die eine Kammer (111) definiert, deren Öffnung der Karosserie (2) zugewandt ist, wobei in dieser Kammer Versteifungsrippen (112) vorgesehen sind.

3. Klappe nach Anspruch 2, **dadurch gekennzeichnet, dass** die Kammer (111) zylinderförmige Vorsprünge (113) enthält, die mit Einsätzen (21) zur Aufnahme von Schrauben (23) zur Befestigung von Gelenkscharnieren (22) der Klappe (1) an der Karosserie (2) versehen sind.

4. Klappe nach einem der Ansprüche 2 oder 3, **dadurch gekennzeichnet, dass** die Leiste (11) eine Aufnahme (114) zur Aufnahme eines Signalgebungsorgans (124) formt, und dass Mittel (25) zur Feststellung dieses Organs in diesem Raum geeignet sind, in der Kammer (111) aktiviert zu werden.

5. Klappe nach einem der Ansprüche 2 bis 4, **dadurch gekennzeichnet, dass** die Leiste (11) von einer Auskehlung (115) eingefasst ist, deren Konkavität zur Außenseite der Klappe hin orientiert ist, wobei die Innenfläche (115a) des Karosserieteils auf der Höhe dieser Auskehlung einen Abschnitt der Strecke (100) formt.

6. Klappe nach einem der obigen Ansprüche, **dadurch gekennzeichnet, dass** die Armatur (10) zwei Hohlstreben (13, 14) formt, die jede eine Kammer (131, 141) definieren, deren Öffnung der Außenseite der Klappe (1) zugewandt ist, wobei jede Kammer mit Versteifungsrippen (132, 142) versehen ist, während die Innenfläche des Karosserieteils auf der Höhe dieser Streben Abschnitte (135a, 145a) der Strecke (100) formt.

7. Klappe nach einem der Ansprüche 1 bis 6, **dadurch gekennzeichnet, dass** mindestens ein Rand (127) der Kammer (121) einen ersten Abschnitt (128) aufweist, der von der unteren Wand (12) aus in Richtung der Karosserie (2) verläuft, und einen zweiten Abschnitt (129), der von diesem ersten Abschnitt aus in Richtung einer Mittelzone (123) dieser Kammer verläuft, wobei ein Abschnitt (129a, 129'a) der Strecke (100) durch diesen zweiten Abschnitt des Rands geformt wird.

8. Klappe nach einem der Ansprüche 1 bis 7, **dadurch gekennzeichnet, dass** sie eine Leiste (17) zum Verschließen des Kanals (125) umfasst, wobei diese Leiste auf der Wand (12) befestigt ist.

9. Klappe nach einem der Ansprüche 1 bis 8, **dadurch gekennzeichnet, dass** der Kanal (125) eine zone (125c) formt, um einen Teil (33) eines Verriegelungsschlosses für die Klappe (1) in ihrer geschlossenen Position an die Karosserie (2) zu montieren.

10. Kraftfahrzeug, das mit einer Klappe (1) nach einem der vorherigen Ansprüche ausgestattet ist.
